# EUROPÄISCHE PATENTANMELDUNG

(11) **EP 4 516 643 A1**
(43) Veröffentlichungstag der Anmeldung: **05.03.2025**
(21) Anmeldenummer: 24190181.8
(22) Anmeldetag: 23.07.2024
(51) Int. Cl.: B62D 25/06, B60H 1/00, B60R 13/02, B62D 33/06

(54) **KABINENDACH SOWIE LANDWIRTSCHAFTLICHE ARBEITSMASCHINE**

(30) Priorität: 04.09.2023 DE 102023123688
(71) Anmelder: CLAAS Tractor S.A.S., 78141 Vélizy-Villacoublay Cedex (FR)
(72) Erfinder: Renault, Pascal, 02810 Gandelu (FR); Perrot, Guilaume, 95000E Eaubonne (FR); Batista, Jonathan, 78000 Versailles (FR)
(74) Vertreter: CLAAS 365FarmNet GmbH

(57) **Zusammenfassung**

Die vorliegende Erfindung betrifft ein Kabinendach (4) einer Kabine (3) einer landwirtschaftlichen Arbeitsmaschine (1), insbesondere eines Traktors (2), wobei das Kabinendach (4) ein unteres Dachelement (7) und ein oberes Dachelement (48) umfasst, welche sich vom Frontbereich (5) zum Heckbereich (6) der Kabine (3) erstecken und zwischen denen Komponenten einer Filtervorrichtung und/oder einer Klimatisierungsvorrichtung angeordnet sind, wobei das untere Dachelement (7) und das obere Dachelement (8) miteinander verbunden sind, wobei zumindest eines der Dachelemente (7, 8) in einem Teilbereich auf seiner dem anderen Dachelement (7, 8) zugewandten Innenseite eine die Steifigkeit des Kabinendachs (4) erhöhende Stützstruktur (11) aufweist.

## Beschreibung

Die vorliegende Erfindung betrifft ein Kabinendach einer Kabine einer landwirtschaftlichen Arbeitsmaschine gemäß dem Oberbegriff des Anspruches 1. Weiterhin ist eine landwirtschaftliche Arbeitsmaschine gemäß dem Anspruch 13 Gegenstand der vorliegenden Erfindung.

Ein Kabinendach sowie eine landwirtschaftliche Arbeitsmaschine der eingangs genannten Art sind aus der DE 10 2018 206 111 A1 bekannt. Das dort beschriebene Kabinendach ist zweischalig ausgeführt, d.h. das Kabinendach umfasst ein unteres und ein oberes Dachelement, wobei an den peripheren, der Außenumgebung zugewandten Verbindungsstellen der unteren und oberen Dachelemente ein Dichtmittel vorgesehen ist, insbesondere ein auf Schaum oder ein auf Kitt basierendes Dichtmittel, um das Eindringen von Verschmutzungen in das Innere des Kabinendachs zu verhindern. Im Inneren des Kabinendachs sind Komponenten einer Filtervorrichtung und/oder einer Klimatisierungsvorrichtung angeordnet. Ebenso erfolgt eine Luftansaugung im Bereich des Kabinendachs, da hier aufgrund des größten Abstands zum Boden weniger Verunreinigungen in der angesagten Luft auftreten. Zudem kommt dem Kabinendach eine Sicherheitsfunktion zu, welche im Rahmen eine FOPS-Prüfung (Falling Object Protective Structure Prüfung) getestet wird.

Ausgehend vom vorstehend genannten Stand der Technik liegt der Erfindung die Aufgabe zugrunde, ein Kabinendach sowie eine landwirtschaftliche Arbeitsmaschine mit einer ein Kabinendach aufweisenden Kabine weiterzubilden, wobei sich das Kabinendach durch eine hohe Steifigkeit auszeichnet, um einen zuverlässigen, die Anforderungen der FOPS-Prüfung erfüllenden Schutz zu gewährleisten.

Diese Aufgabe wird erfindungsgemäß durch ein Kabinendach mit den Merkmalen des Anspruches 1 sowie durch eine landwirtschaftliche Arbeitsmaschine mit den Merkmalen des Anspruches 13 gelöst. Vorteilhafte Weiterbildungen sind Gegenstand der abhängigen Ansprüche.

Gemäß dem Anspruch 1 wird ein Kabinendach einer Kabine einer landwirtschaftlichen Arbeitsmaschine, insbesondere eines Traktors, vorgeschlagen, wobei das Kabinendach ein unteres Dachelement und ein oberes Dachelement umfasst, welche sich vom Frontbereich zum Heckbereich der Kabine erstecken und zwischen denen Komponenten einer Filtervorrichtung und/oder einer Klimatisierungsvorrichtung angeordnet sind, wobei das untere Dachelement und das obere Dachelement miteinander verbunden sind. Erfindungsgemäß ist vorgesehen, dass zumindest eines der Dachelemente in einem Teilbereich auf seiner dem anderen Dachelement zugewandten Innenseite eine die Steifigkeit des Kabinendachs erhöhende Stützstruktur aufweist. Durch die im Inneren des Kabinendachs angeordnete Stützstruktur wird ein Kabinendach mit einer hohen Steifigkeit bereitgestellt. Das Kabinendach weist einen hohen Widerstand gegen Verformungen auf. Hierdurch wird ein signifikanter Schutz der Person im Inneren der Kabine vor auf das Kabinendach fallenden Teilen oder bei einem Umkippen des Traktors, wenn dabei das Kabinendach mit dem Boden oder Umgebungsstrukturen in Berührung kommt, erreicht.

Bevorzugt sind das untere Dachelement und das obere Dachelement schalenförmig ausgeführt. Vorzugsweise kann die Stützstruktur nur auf der Innenseite des unteren Dachelementes oder des oberen Dachelementes angeordnet sein.

Insbesondere kann die Stützstruktur im heckseitigen Bereich des zumindest einen Dachelementes angeordnet sein. Der Teilbereich, in welchem die Stützstruktur angeordnet ist, bildet dabei eine heckseitige Hälfte des Kabinendaches aus.

Bevorzugt kann die Stützstruktur rippenförmig ausgeführt sein. Hierdurch kann eine hohe Steifigkeit der Stützstruktur erreicht werden.

Dabei kann die rippenförmig ausgeführte Stützstruktur ein im Wesentlichen U-förmiges Querschnittsprofil aufweisen. So können horizontal verlaufende Abschnitte der Stützstruktur Auflageflächen ausbilden, auf denen sich das gegenüberliegende Dachelement abstützen kann.

Des Weiteren kann die Stützstruktur zumindest eine in Längsrichtung verlaufende Längsrippe und mehrere in Querrichtung verlaufende Querrippen aufweisen, die sich beidseitig der zumindest einen Längsrippe abschnittsweise nach außen erstrecken. Die Stützstruktur kann dabei eine im Wesentlichen H-förmige Kontur aufweisen. Die Querrippen verlaufen senkrecht zur zumindest einen Längsrippe.

Insbesondere kann die Stützstruktur durch Verkleben mit dem anderen Dachelement verbunden sein. Hierdurch wird der Montagevorgang vereinfacht. Zudem kann das Verkleben in diesem Bereich eine Abdichtungsfunktion übernehmen. Ein weiterer Vorteil besteht darin, dass die stoffschlüssige Verbindung zwischen den beiden Dachelementen gegenüber dem Zusammenbau durch Verschrauben eine Verbesserung von Energieaufnahme und Energieabgabe ermöglicht, wenn es zu einem Unfall kommt.

Gemäß einer bevorzugten Weiterbildung kann die Stützstruktur als integraler Bestandteil des zumindest einen Dachelementes ausgebildet sein. Somit kann auf zusätzlich herzustellende und zu montierende Bauteile verzichtet werden. Dies führt zu fertigungs- und kostentechnischen Vorteilen.

Insbesondere kann die Stützstruktur des zumindest einen Dachelementes als Profilierung ausgebildet sein. Das in der Regel aus einem Metall bestehende, als Profilbauteil ausgeführte Dachelement lässt sich kostengünstig durch einen Umformprozess herstellen. Die Ausbildung der Stützstruktur als integraler Bestandteil des zumindest einen Dachelementes vereinfacht somit den Herstellprozess.

Weiter bevorzugt kann die Stützstruktur zumindest abschnittsweise durch Isolationsmaterial eingefasst sein. Durch das Isolationsmaterial kann zu einer verbesserten Geräuschdämmung im Inneren der Kabine beigetragen werden. Insbesondere kann dem Auftreten von Nachhalleffekten begegnet werden, die in Hohlräumen zwischen den Dachelementen auftreten können.

Insbesondere kann zumindest im Frontbereich zwischen dem unteren Dachelement und dem oberen Dachelement Isolationsmaterial eingebracht sein. Auch dies trägt zu einer verbesserten Geräuschdämmung im Inneren der Kabine bei.

Bevorzugt kann das Isolationsmaterial als ein aufschäumbares oder aufgeschäumtes Kunststoffmaterial, insbesondere auf Basis von Polyurethan, ausgeführt sein.

Gemäß einer bevorzugten Weiterbildung kann die Dimensionierung der Stützstruktur auf einem Ergebnis einer Berechnung mittels einer Finite-Elemente-Methode unter Berücksichtigung von Erfordernissen einer FOPS-Prüfung (Falling Object Protective Structure Prüfung) basieren. Somit kann eine an die zu erwartende Belastung angepasste Dimensionierung der Dachelemente durchgeführt werden. Hierbei kann die Wandstärke zumindest des oberen Dachelementes im frontseitigen Bereich der Kabine größer ausgeführt sein als im heckseitigen Bereich, in welchem sich die Stützstruktur befindet. Des Weiteren lässt sich die Form der Dachelemente optimieren und geklebte Bereiche auf im heckseitigen Bereich der Kabine definieren, um Risse zu vermeiden.

Die eingangs gestellte Aufgabe wird weiterhin durch eine landwirtschaftliche Arbeitsmaschine mit den Merkmalen des nebengeordneten Anspruches 13 gelöst.

Gemäß dem nebengeordneten Anspruch 13 wird eine landwirtschaftliche Arbeitsmaschine, insbesondere ein Traktor, mit einer ein Kabinendach aufweisenden Kabine vorgeschlagen, wobei das Kabinendach einem der Ansprüche 1 bis 12 ausgeführt ist. Auf die Vorteile des erfindungsgemäßen Kabinendachs darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Arbeitsmaschine in Seitenansicht;
- Fig. 2: schematisch und exemplarisch eine Draufsicht auf ein Kabinendach;
- Fig. 3: schematisch und exemplarisch eine perspektivische Ansicht auf ein unteres Dachelement des Kabinendachs gemäß Fig. 2;
- Fig. 4: schematisch und exemplarisch eine Teilansicht des unteren Dachelementes gemäß Fig. 3; und
- Fig. 5: schematisch und exemplarisch eine perspektivische Teilansicht des Kabinendachs im Längsschnitt entlang der Linie A-A gemäß Fig. 4.

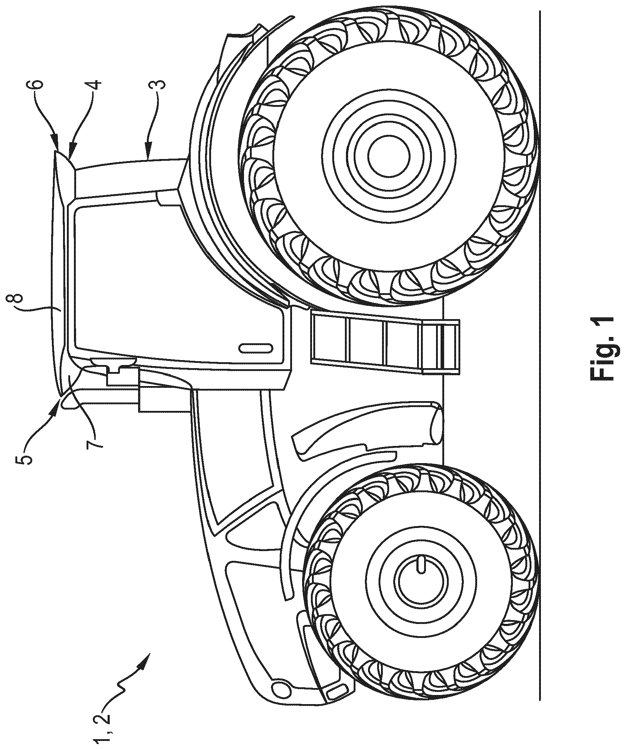

In Fig. 1 ist schematisch und exemplarisch eine landwirtschaftliche Arbeitsmaschine 1 in Seitenansicht dargestellt. Die landwirtschaftliche Arbeitsmaschine 1 ist insbesondere als ein Traktor 2 ausgeführt. Die landwirtschaftliche Arbeitsmaschine 1 umfasst eine Kabine 3. Die Kabine 3 ist nach oben hin durch ein Kabinendach 4 abgeschlossen. Das Kabinendach 4 erstreckt sich vom Frontbereich 5 bis zum Heckbereich 6 der Kabine 3. Das Kabinendach 4 umfasst ein unteres Dachelement 7 und ein oberes Dachelement 8. In dem Kabinendach 4 sind zwischen dem unteren Dachelement 7 und dem oberen Dachelement 8 Komponenten einer Filtervorrichtung und/oder einer Klimatisierungsvorrichtung angeordnet. Bevorzugt sind das untere Dachelement 7 und das obere Dachelement 8 schalenförmig ausgeführt.

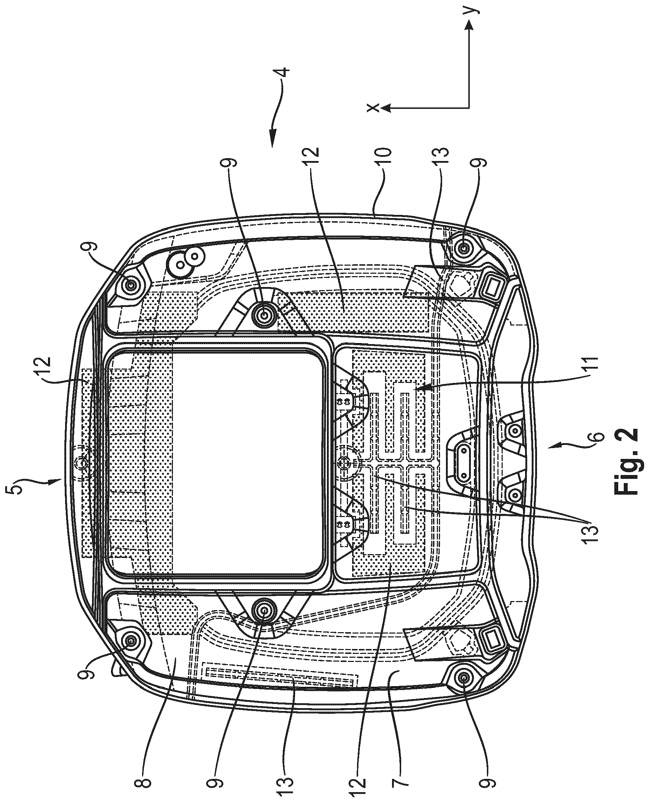

Die Darstellung in Fig. 2 zeigt schematisch und exemplarisch eine Draufsicht auf das Kabinendach 4. Das obere Dachelement 8 des Kabinendachs 4 ist hier transparent dargestellt, so dass das darunter befindliche untere Dachelement 7 zu erkennen ist. Das untere Dachelement 7 und das obere Dachelement 8 sind miteinander verbunden. Hierzu sind mehrere Befestigungspunkte 9 vorgesehen, die der Aufnahme von Befestigungsmitteln dienen. Zudem können das untere Dachelement 7 und das obere Dachelement 8 durch einen umlaufenden Klebeabschnitt 10 am äußeren Rand der Dachelemente 7, 8 miteinander stoffschlüssig verbunden sein. Der am äußeren Rand umlaufende Klebeabschnitt 10 kann zudem der Abdichtung des Kabinendachs 4 dienen, um das Eindringen von Staub und dergleichen zu verhindern.

Zwischen dem unteren Dachelement 7 und dem oberen Dachelement 8 ist eine Stützstruktur 11 angeordnet. Insbesondere ist die Stützstruktur 11 im Heckbereich 6 des Kabinendachs 4 angeordnet. Die Stützstruktur 11 kann sowohl am unteren Dachelement 7 als auch am oberen Dachelement 8 angeordnet bzw. ausgebildet sein. Im dargestellten Ausführungsbeispiel ist die Stützstruktur 11 auf dem unteren Dachelement 7 angeordnet bzw. ausgebildet.

Zumindest im Frontbereich 5 ist zwischen dem unteren Dachelement 7 und dem oberen Dachelement 8 Isolationsmaterial 12 eingebracht. Weiteres Isolationsmaterial 12 erstreckt sich abschnittsweise in Längsrichtung x des Kabinendachs 4 in einem dort befindlichen Hohlraum. Die Stützstruktur 11 ist zumindest abschnittsweise durch Isolationsmaterial 12 eingefasst. Das Isolationsmaterial 12 ist als ein aufschäumbares oder aufgeschäumtes Kunststoffmaterial, insbesondere auf Basis von Polyurethan, ausgeführt. Durch das Isolationsmaterial 12 kann zu einer verbesserten Geräuschdämmung im Inneren der Kabine 3 beigetragen werden. Insbesondere kann dem Auftreten von Nachhalleffekten begegnet werden, die in Hohlräumen innerhalb des Kabinendachs 4 auftreten können.

Ein weiterer innenliegender Klebeabschnitt 13 verbindet unter anderem die Stützstruktur 11 mit dem oberen Dachelement 8.

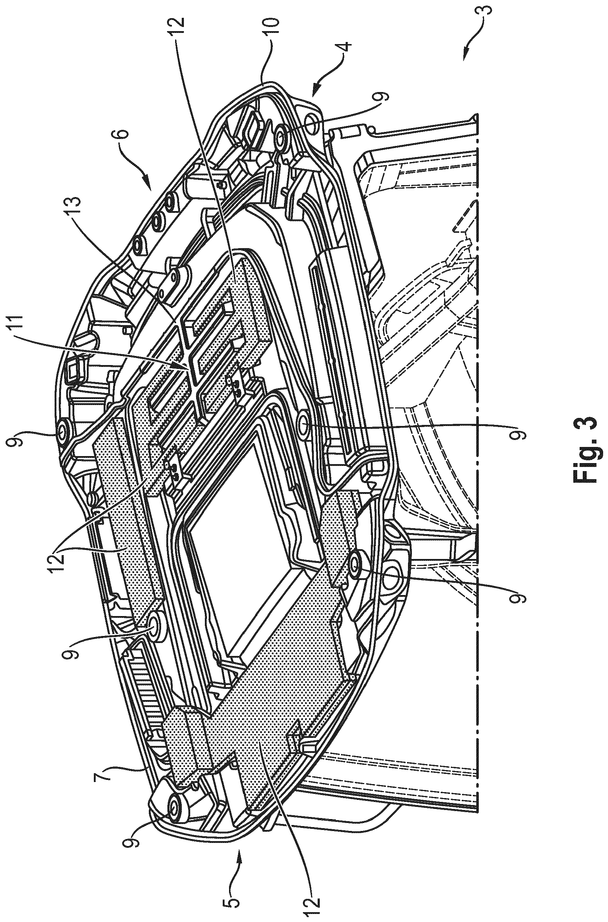

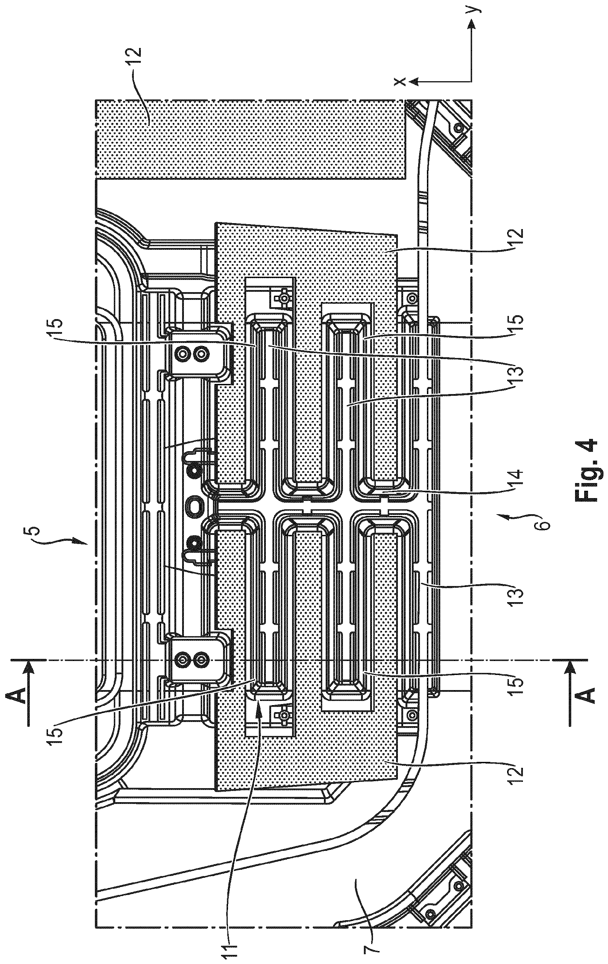

In Fig. 3 ist schematisch und exemplarisch eine perspektivische Ansicht auf das untere Dachelement 7 des Kabinendachs 4 gemäß Fig. 2 dargestellt. Die Darstellung in Fig. 4 zeigt schematisch und exemplarisch eine Teilansicht des unteren Dachelementes 7 gemäß Fig. 3 zur Veranschaulichung der Ausgestaltung der Stützstruktur 11.

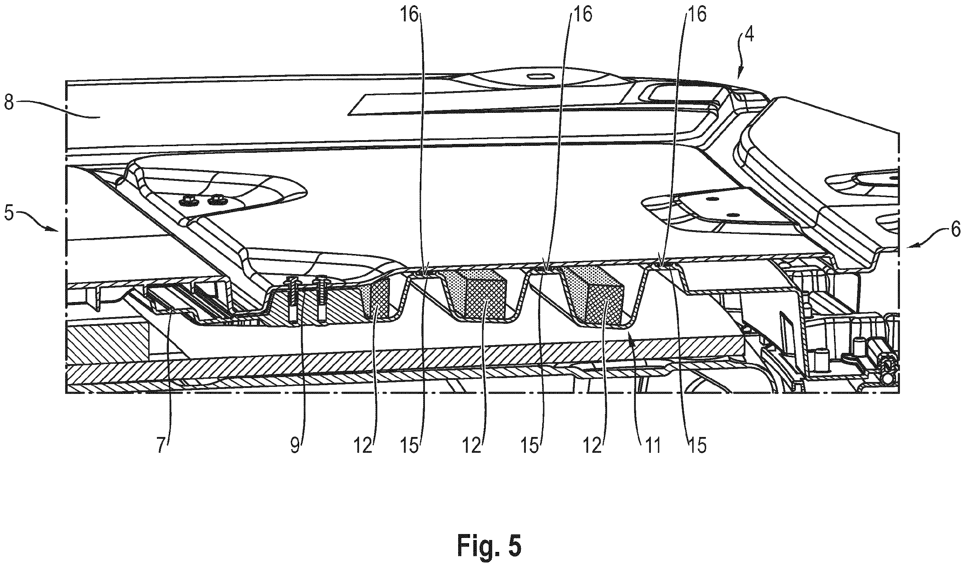

Die Stützstruktur 11 ist im Wesentlichen rippenförmig ausgeführt. Die rippenförmig ausgeführte Stützstruktur 11 weist ein im Wesentlichen U-förmiges Querschnittsprofil auf, wie aus der Darstellung in Fig. 5 ersichtlich ist. Die Stützstruktur 11 weist zumindest eine in Längsrichtung x verlaufende Längsrippe 14 und mehrere in Querrichtung y verlaufende Querrippen 15 auf, die sich beidseitig der zumindest einen Längsrippe 14 abschnittsweise in Querrichtung y nach außen erstrecken. Die Stützstruktur 11 kann dabei eine im Wesentlichen H-förmige Kontur aufweisen.

Die Stützstruktur 11 ist beidseitig von Isolationsmaterial 12 eingefasst, welches jeweils im Wesentlichen an die Kontur der Querrippen 15 angepasst ist. Bevorzugt kann das jeweilige Isolationsmaterial 12 als vorgeformter Abschnitt ausgeführt sein, der in die dafür vorgesehenen Hohlräume eingelegt wird.

In Fig. 5 ist schematisch und exemplarisch eine perspektivische Teilansicht des Kabinendachs 4 im Längsschnitt entlang der Linie A-A gemäß Fig. 4 dargestellt. Die Stützstruktur 11 ist als integraler Bestandteil zumindest eines der Dachelemente 7, 8 ausgebildet. Hier und vorzugsweise ist die Stützstruktur 11 ist als integraler Bestandteil des unteren Dachelementes 7 ausgeführt. Die Stützstruktur 11 des Dachelementes 7 ist als Profilierung ausgebildet. Dies kann bevorzugt durch eine Herstellung des Dachelementes 7 in einem Umformprozess durchgeführt werden.

Aufgrund des im Wesentlichen U-förmigen Querschnittsprofils der Stützstruktur 11 können horizontal verlaufende Abschnitte der Stützstruktur 11 Auflageflächen 16 ausbilden, auf denen sich das gegenüberliegend angeordnete Dachelement 8 abstützen kann. Die Auflageflächen 16 bilden zugleich die innenliegenden Klebeabschnitte 13 aus, durch die das untere Dachelement 7 und das obere Dachelement 8 im Bereich der Stützstruktur 11 miteinander verbunden sind.

### Bezugszeichenliste

- 1: Arbeitsmaschine
- 2: Traktor
- 3: Kabine
- 4: Kabinendach
- 5: Frontbereich
- 6: Heckbereich
- 7: Unteres Dachelement
- 8: Oberes Dachelement
- 9: Befestigungspunkt
- 10: Klebeabschnitt
- 11: Stützstruktur
- 12: Isolationsmaterial
- 13: Klebeabschnitt
- 14: Längsrippe
- 15: Querrippe
- 16: Auflagefläche

- x: Längsrichtung
- y: Querrichtung

## Patentansprüche

1. Kabinendach (4) einer Kabine (3) einer landwirtschaftlichen Arbeitsmaschine (1), insbesondere eines Traktors (2), wobei das Kabinendach (4) ein unteres Dachelement (7) und ein oberes Dachelement (48) umfasst, welche sich vom Frontbereich (5) zum Heckbereich (6) der Kabine (3) erstecken und zwischen denen Komponenten einer Filtervorrichtung und/oder einer Klimatisierungsvorrichtung angeordnet sind, wobei das untere Dachelement (7) und das obere Dachelement (8) miteinander verbunden sind, **dadurch gekennzeichnet, dass** zumindest eines der Dachelemente (7, 8) in einem Teilbereich auf seiner dem anderen Dachelement (7, 8) zugewandten Innenseite eine die Steifigkeit des Kabinendachs (4) erhöhende Stützstruktur (11) aufweist.

2. Kabinendach (4) nach Anspruch 1, **dadurch gekennzeichnet, dass** die Stützstruktur (11) im Heckbereich (6) des zumindest einen Dachelementes (7, 8) angeordnet ist.

3. Kabinendach (4) nach Anspruch 1 oder 2, **dadurch gekennzeichnet, dass** die Stützstruktur (11) rippenförmig ausgeführt ist.

4. Kabinendach (4) nach Anspruch 3, **dadurch gekennzeichnet, dass** die rippenförmig ausgeführte Stützstruktur (11) ein im Wesentlichen U-förmiges Querschnittsprofil aufweist.

5. Kabinendach (4) nach Anspruch 3 oder 4, **dadurch gekennzeichnet, dass** die Stützstruktur (11) zumindest eine in Längsrichtung (x) verlaufende Längsrippe (14) und mehrere in Querrichtung (y) verlaufende Querrippen (15) aufweist, die sich beidseitig der zumindest einen Längsrippe (14) abschnittsweise nach außen erstrecken.

6. Kabinendach (4) nach einem der vorangehenden Ansprüche, **dadurch gekennzeichnet, dass** die Stützstruktur (11) durch Verkleben mit dem anderen Dachelement (7, 8) verbunden ist.

7. Kabinendach (4) nach einem der vorangehenden Ansprüche, **dadurch gekennzeichnet, dass** die Stützstruktur (11) als integraler Bestandteil des zumindest einen Dachelementes (7, 8) ausgebildet ist.

8. Kabinendach (4) nach Anspruch 7, **dadurch gekennzeichnet, dass** die Stützstruktur (11) des zumindest einen Dachelementes (7, 8) als Profilierung ausgebildet ist.

9. Kabinendach (4) nach einem der vorangehenden Ansprüche, **dadurch gekennzeichnet, dass** die Stützstruktur (11) zumindest abschnittsweise durch Isolationsmaterial (12) eingefasst ist.

10. Kabinendach (4) nach einem der vorangehenden Ansprüche, **dadurch gekennzeichnet, dass** zumindest im Frontbereich (5) zwischen dem unteren Dachelement (7) und dem oberen Dachelement (8) Isolationsmaterial (12) eingebracht ist.

11. Kabinendach (4) nach Anspruch 9 oder 10, **dadurch gekennzeichnet, dass** das Isolationsmaterial (12) als ein aufschäumbares oder aufgeschäumtes Kunststoffmaterial, insbesondere auf Basis von Polyurethan, ausgeführt ist.

12. Kabinendach (4) nach einem der vorangehenden Ansprüche, **dadurch gekennzeichnet, dass** die Dimensionierung der Stützstruktur (11) auf einem Ergebnis einer Berechnung mittels einer Finite-Elemente-Methode unter Berücksichtigung von Erfordernissen einer FOPS-Prüfung (Falling Object Protective Structure Prüfung) basiert.

13. Landwirtschaftliche Arbeitsmaschine (1), insbesondere Traktor (2), mit einer ein Kabinendach (4) aufweisenden Kabine (1), **dadurch gekennzeichnet, dass** das Kabinendach (4) nach einem der Ansprüche 1 bis 12 ausgeführt ist.
